# EUROPÄISCHE PATENTSCHRIFT

(11) **EP 1 475 905 B1**
(45) Veröffentlichungstag und Bekanntmachung des Hinweises auf die Patenterteilung: **07.02.2007**
(21) Anmeldenummer: 04010629.6
(22) Anmeldetag: 05.05.2004
(51) Int. Cl.: H04B 10/00, H04B 10/10

(54) **Verfahren zur optischen Übertragung von digitalen Signalen**
Method for optical transmission of digital signals
Procédé de transmission optique de signeaux numériques

(30) Priorität: 08.05.2003 DE 10320814
(43) Veröffentlichungstag der Anmeldung: 10.11.2004
(73) Patentinhaber: Deutsches Zentrum für Luft- und Raumfahrt e.V., 51147 Köln (DE)
(72) Erfinder: Henniger, Hennes, Dipl.-Ing., 82211 Herrsching (DE)
(74) Vertreter: von Kirschbaum, Albrecht

(56) Entgegenhaltungen:
- EP-A- 1 289 168
- WO-A-01/06663
- PURVINSKIS R; GIGGENBACH D; HENNIGER H; PERLOT N; DAVID F: PROCEEDINGS OF THE SPIE, Bd. 4975, 28. Januar 2003 (2003-01-28), Seiten 12-19, XP002320700 SAN JOSE, USA
- HENNINGER H.; GIGGENBACH D.; DAVID F.: 'Evaluation of FEC for the Atmospheric Optical IM/DD Channel' PHOTONICS WEST 2003 Bd. 4975, 28 Januar 2003, SAN JOSE, CA, USA,

## Beschreibung

Die Erfindung betrifft ein Verfahren zur optischen Übertragung von auf Lichtwellen in Form einer Intensitätsmodulation aufmodulierten, digitalen Signalen über eine optische Freistrahl-Übertragungsstrecke zwischen einer Sendeseite und einem Empfänger, wobei zum einen mehrere statistisch weitgehend unabhängige und unkorrelierte Kanäle mittels Anwendung eines optischen Diversitätsprinzips erzeugt werden und zum anderen sendeseitig mittels eines Fehlersicherungscodes eine aus Sequenzen bestehende Kanalcodierung vorgenommen wird, die durch Hinzufügen von Redundanz eine im Empfänger durchzuführende Korrektur von Übertragungsfehlern ermöglicht, die durch Schwund, d.h. durch Einbruch der Signal-Empfangsleistung gegenüber der mittleren Signal-Empfangsleistung, entstanden sind.

Ein derartiges Verfahren ist im Konferenzdokument zu "Evaluation of FEC for the Atmospheric Optical IM/DD Channel" (S.1 bis 10) der Konferenz Photonics West LASE, 2003 in San Jose, CA USA vom 25. bis 31. Januar 2003 beschrieben.

Bekanntlich werden elektromagnetische Wellen im optischen Bereich beim Passieren turbulenter atmosphärischer Regionen auf Grund zeitlicher und örtlicher Brechungsindexschwankungen der Luft gestört. Bei einer Freistrahl-Datenübertragungsstrecke nach Art eines optischen Richtfunks führt dies beim Empfänger zu teils extremen Intensitätsschwankungen, wobei Signaleinbrüche, d.h. sogenannte "Fades", bis über 10 dB relativ zum Mittelwert registriert werden. Durch den vorübergehenden Signalschwund kommt es beim Empfänger zu einer erheblichen Verschlechterung der Datenübertragungsqualität, die durch die Bitfehlerwahrscheinlichkeit charakterisiert wird. Hiermit ist eine Häufung der Übertragungsfehler verbunden. Als Modulationsverfahren wird hierbei Intensitätsmodulation und Direktempfang (IM/DD) zu Grunde gelegt.

Das Fading kann in seinen störenden Auswirkungen bekanntlich durch Diversitätsverfahren reduziert werden. Bei diesen Verfahren kommt es zu einer statistischen Mittelung der Intensität am Empfänger und somit zu einer Verringerung der Fading-Störungen, die allerdings nicht vollständig eliminiert werden können.

Als Diversitätsverfahren hat sich in der Freiraumoptik im wesentlichen das Prinzip der Senderdiversität, einem Sonderfall der Raumdiversität, als vorteilhaft erwiesen. Hierbei propagieren mindestens zwei Strahlen zumindest teilweise durch verschiedene Volumina der Atmosphäre und erzeugen somit am Empfänger statistisch unabhängige Felder. Am Empfänger wird in üblicher Weise die Summe der Felder detektiert (Equal Gain Combining). Das Senderdiversitätsprinzip ist z.B. im Aufsatz von I. I. Kim et al: "Scintillation reduction using multiple transmitters" in Proc. of SPIE, Vol. 2990, Free-Space Laser Communication Technologies IX, 1997, Seiten 102 bis 113 und auch im Aufsatz von D. Giggenbach, F. David et al.: "Measurements at a 61 km near-ground optical transmission channel" in Proc. of SPIE, Vol. 4635, Free-Space Laser Communication Technologies XIV, 2002 beschrieben.

Im zuletzt genannten Artikel wird durch Messergebnisse belegt, dass die im optischen Freiraumkanal auftretenden Fadelängen im Vergleich zu den Bitdauern bei momentan üblichen Datenraten (>100 Mbps) sehr lang sind. Da diese langen Fades, je nach Auslegung des Übertragungssystems, zu langen Störungen des Übertragungskanals führen können, wird hier ein an sich bekanntes Verfahren zur Minimierung der Fadingwahrscheinlichkeit der Empfangsleistung angewandt. Es handelt sich um senderseitige Ortsdiversität. Die statistisch weitgehend unabhängigen Empfangssignale (Intensitätsverteilungen) der beiden Sender werden im Empfänger nach dem sogenannten Equal Gain Combining(EGC)-Verfahren addiert. Die emittierten Datensignale der beiden Sender sind identisch. Es handelt sich hier um ein reines Diversitätsverfahren. Eine Codierung oder eine besondere Kombination von Codierung und Diversitätsverfahren werden hier nicht ausgeführt.

Als weitere Diversitätsverfahren bei einem optischen Freiraum-Kommunikationssystem sind das bereits kurz angesprochene allgemeine Raumdiversitätsverfahren, das beispielsweise in US-3 536 922 beschrieben ist und dem vorher erläuterten Senderdiversitätsprinzip gleicht, und das Verfahren der Wellenlängendiversität bekannt. Bei letzterem gibt es zwei Ansätze der Fading-Reduzierung. Nach dem ersten Ansatz passiert das Sendesignal abhängig von seiner Wellenlänge unterschiedliche turbulente Volumina und zwar auf Grund der Wellenlängenabhängigkeit der Refraktion und erzeugt daher unterschiedliche Intensitäts-Specklemuster. Nach dem zweiten Ansatz passiert das Sendesignal auf den verschiedenen Wellenlängen zwar das gleiche turbulente Luftvolumen, aber es entstehen unterschiedliche Intensitäts-Specklemuster, da die Turbulenzeffekte ihrerseits wellenlängenabhängig sind.

Wellenlängendiversität und in ähnlicher Weise wirksame Polarisationsdiversität bei einem optischen Freiraum-Kommunikationssystem sind aus der PCT-Anmeldung WO 01/06 663 A2 bekannt. Dort wird ein drahtloses optisches Freiraum-Kommunikationssystem mit Fading-Widerstandsfähigkeit beschrieben, bei dem die Daten in einem Satz von mehreren verschiedenen Lichtsignalen in Form entweder gleicher Datenpakete oder gleicher Codesymbole zeitlich versetzt ausgesendet werden, die jeweils eine unterschiedliche Polarisation und/oder Wellenlänge aufweisen. Die verschiedenen Lichtsignale sind zeitlich unterschiedlich, weil sie mit zeitlicher Verzögerung zueinander ausgesendet werden. Auf diese Weise wird jedes Lichtsignal über einen unterschiedlichen, unkorrelierten Kanal durch die Atmosphäre übertragen. Die Diversität wird also durch einen zeitlichen Versatz erreicht. Es sollen durch zeitlichen Versatz unkorrelierte Signale Kanäle entstehen. Um die zeitlich versetzt gesendeten Pakete besser getrennt voneinander detektieren zu können, kann für Datenpakete gleicher Verzögerung eine bestimmte Wellenlänge oder Polarisation verwendet werden. Im Empfänger werden die ursprünglichen Daten in jedem empfangenen Lichtsignal wieder zeitlich abgestimmt und zu einem einzigen Ausgangsdatensignal kombiniert. In der PCT-Anmeldung WO 01/06 663 A2 ist auch angesprochen, dass sich die Bitfehlerrate, die trotz der Anwendung der verschiedenen die Hardware betreffenden Diversitätsmaßnahmen in manchen Fading-Fällen immer noch erheblich sein kann, durch Codiertechniken verbessern lässt. Um die Übertragungsqualität zu verbessern, wird speziell eine kanalweise Fehlerkorrektur in Zusammenhang mit Codierung verwendet. Dieses Verfahren hat den Nachteil, dass es nur effektiv arbeiten kann, wenn die Verzögerungszeiten in der Größenordnung der Schwundzeitkonstanten liegen.

Um den Einfluss des Fadings auf die Übertragungsqualität zu verringern, werden in bekannter Weise Kanalcodierungsverfahren verwendet, die durch Hinzufügen von Redundanz entstehende Übertragungsfehler korrigieren können. Hierdurch wird bei geeigneter Wahl der Codierungsverfahren eine Verringerung der Fehlerwahrscheinlichkeit und somit eine Verbesserung der Übertragungsqualität erreicht. Bei der Codierung müssen immer empfangene Sequenzen von Zeiten hoher Empfangsleistung mit Sequenzen, die bei niedriger Empfangsleistung, also während "Fades" empfangen wurden, gemeinsam betrachtet werden, um die sich während eines Fades häufenden Fehler korrigieren zu können. Die Schwierigkeit besteht nun darin, dass die mittlere Fade-Dauer, gewöhnlich einige Millisekunden, um Größenordnungen größer als die Bitdauer bei den in der optischen Nachrichtentechnik in üblicher Weise verwendeten Bitraten (>100 Mbit/s) ist. Um übertragene Sequenzen von Zeiten hoher Empfangsleistung mit Sequenzen, die während eines Fades übertragen wurden, gemeinsam betrachten zu können, ist ein Zwischenspeicher von sehr großer Speicherkapazität erforderlich. Diese Zwischenspeicherung ist gleichzeitig mit einer Verzögerung der Datenübertragung verbunden, die oft unerwünscht oder von der vorgesehenen Anwendung nicht tolerierbar ist.

Da sich optische Freiraum-Kommunikationssysteme noch weitgehend im experimentellen Status befinden, wurden bislang noch keine speziellen Codierverfahren für die optische Freiraumkommunikation entwickelt. Bis jetzt werden die beispielsweise aus der Mikrowellen-Nachrichtenübertragungstechnik bekannten und z.B. in dem Buch von B. Friedrichs: "Kanalcodierung, Grundlagen und Anwendungen in modernen Kommunikationssystemen", Springer Verlag, Berlin, 1996 beschriebenen Codierverfahren wie Blockcodierung oder Codierung mit Faltungscodes verwendet. Um die während eines Fadingeinbruches entstehenden Bündelfehler korrigieren zu können, würden allerdings Codes benötigt, deren Einflusslänge länger als die Fadinglänge ist. Wegen des im Vergleich zu den sehr kurzen Bitdauern sehr langsamen Fadings müssten diese Codes extrem lang sein. Derart lange Codes existieren derzeit nicht. Um Fehlerbündel aufzuspalten und zu vermeiden, dass mehr als die Anzahl der korrigierbaren Fehler in einer Sequenz der Länge n auftreten, kann man sich der Technik des sogenannten Interleavings bedienen. Interleaving ist ein Prozess der deterministischen Umsortierung der Anordnung von Bits.

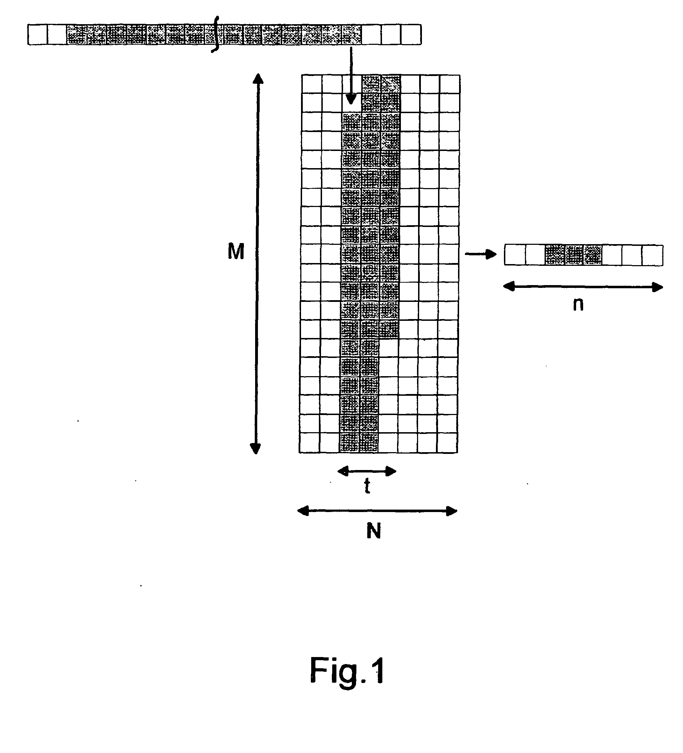

In Fig.1 ist dieses Umsortierungsprinzip anhand der Implementierung eines Block-Interleavers verdeutlicht. Eine Sequenz der Länge n wird in eine Speichermatrix spaltenweise eingelesen und zeilenweise ausgelesen. Ist die Anzahl der Zeilen in der Größenordnung der Anzahl der Bits, die während eines Fadingeinbruches empfangen werden, so ist beim zeilenweise vorgenommenen Auslesen die Anzahl der Fehler pro Zeile (Sequenz der Länge n) gering. Die zeilenweise ausgelesenen Sequenzen mit nur wenigen Fehlern können gut durch die Fehlerkorrektureigenschaften beispielsweise von Blockcodes in einen fehlerfreien Zustand gebracht werden.

Im Beispiel von Fig.1 erfolgt das Aufspalten eines Fehlerbündels mit Hilfe eines Interleavers der Größe M x N. Ein Fehlerbündel verteilt sich auf maximal t Spalten, so dass beim zeilenweisen Auslesen der Matrix in einer Codesequenz der Länge n maximal t Fehler enthalten sind. In Fig.1 sind die grau unterlegten Bits solche Bits, die mit großer Wahrscheinlichkeit verfälscht sind, und die weißen Bits solche Bits, die mit großer Wahrscheinlichkeit richtig sind.

Beispielsweise ist in EP 1 253 729 A2 eine das Interleaving-Prinzip anwendende Einrichtung zum Reduzieren von Szintillationseffekten bei der optischen Freiraum-Übertragung beschrieben. Hierbei wird ein zu übertragender Bitdatenstrom in Reed-Solomon Codewörter codiert, die fragmentiert und als verwürfelte Segmente über eine Zellenmatrix eines Pufferspeichers verteilt werden, der groß genug ist, um einen über 20 Millionen aufeinanderfolgende Bits auftretenden Burstfehler zu korrigieren.

Das hauptsächliche Problem der herkömmlichen Codierverfahren ist, dass es keine Codes gibt, deren Einflusslänge größer als die Fehlerbündellänge der während eines Fades erzeugten Fehlersequenzen ist. Selbst wenn es solch lange Codes gäbe, hätten sie den Nachteil einer sehr langen Decodierverzögerung. Um auch Codes, deren Einflusslänge kürzer als die Fehlerbündellänge ist, effektiv nutzen zu können, ist bislang nur das Verfahren des Interleavings bekannt. Da Interleaver jedoch Daten für eine Zeit, die länger als die Fade-Dauer ist, zwischenspeichern müssen, um effektiv arbeiten zu können, sind hierzu enorm große Speichermatrizen erforderlich. Die Organisation und Herstellung derart großer Speicher und das Schreiben und Lesen mit hoher Geschwindigkeit sind technisch nur durch sehr aufwändige Verfahren realisierbar. Außerdem führt die Zwischenspeicherung eventuell zu Verzögerungen, die für die Anwendungen, z.B. für eine Sprachübertragung, nicht mehr tolerierbar sind.

Aus EP 12 31 724 A1 ist ein Verfahren zur Übertragung eines digitalen optischen Signals durch den freien Raum bekannt, bei dem das Signal nach Aufspalten in mehrere identische Signale über unterschiedliche optische Pfade von einem Empfänger detektiert und über einen Signalkombinierer zusammengefasst wird. In einer Variante dieses Verfahrens werden charakteristische Signalsequenzen, die einem Signalpaket beigeordnet werden, zur Fehlererkennung in den übertragenen Signalen und zu deren Korrektur verwendet. Es wird hier davon ausgegangen, dass identische Signale bzw. identische Signale mit hinzugefügter Redundanz parallel über zwei oder mehr optische Kanäle (Anzahl der Kanäle = N) übertragen werden. Durch die parallele Übertragung wird erreicht, dass beim Totalausfall von N-1 Kanälen weiterhin die Information von der Quelle zur Senke übertragen werden kann. Zur Fehlerkorrektur und Fehlererkennung der in einem Kanal entstandenen Übertragungsfehler wird die sendeseitig hinzugefügte Redundanz verwendet. Das hier beschriebene Verfahren soll durch parallele Übertragung identischer Signale resistent gegen die kurzzeitig auf einzelnen Wegstrecken auftretende Blockierung des Strahlengangs durch Hindernisse gemacht werden.

In US 2002/01 57 060 A1 sind ein Verfahren sowie ein System zur optischen Freistrahlübertragung von Datensignalen beschrieben, so dass sich auftretende Szintillationseffekte verringern lassen. Es wird hier ein Codierungsverfahren für die optische Freiraumkommunikation angeführt. Das Prinzip dieses Verfahrens beruht darauf, Fehlerblöcke durch Interleaving derart zu spreizen, dass eine Fehlerkorrektur durch die zusätzlich übertragene Redundanz möglich wird. Kernpunkt ist hierbei ein spezielles Verfahren für die Hardware-Implementierung von Interleavern, welches ein Interleaving für sehr lange Bitsequenzen technisch ermöglicht. Es wird hier von der Übertragung der Signale lediglich über einen einzelnen Kanal ausgegangen.

Aus WO 00/16 489 A2 ist ein optisches Freistrahl-Datenübertragungssystem mit mehreren Signalgebern und entsprechenden Empfängern bekannt. Dieses bekannte Verfahren zeichnet sich dadurch aus, dass zur Vermeidung des Einflusses der Szintillationen das optische Signal mit einem Splitter am Sender aufgeteilt wird. Hierbei werden wie bei dem aus EP 12 31 724 A1 bekannten optischen Übertragungsverfahren identische optische Signale über mehrere Kanäle übertragen. Im Empfänger werden diese getrennt voneinander übertragenen optischen Signale in einem Combiner überlagert. Dies entspricht dem bekannten Verfahren der Senderortsdiversität. In WO 00/16 489 A2 wird des weiteren der Aufbau einer optischen Freiraum-Übertragungsstrecke durch mehrere Einzelkomponenten, wie elektro-optische Konverter, Splitter, Lichtwellenleiter, optische Verstärker etc., näher beschrieben und spezifiziert. Zur Minimierung des durch Szintillationen entstehenden Schwundes wird jedoch lediglich ein Ortsdiversitätsverfahren angewandt.

Der Erfindung liegt die Aufgabe zu Grunde, bei der optischen Freiraum-Übertragung digitaler Lichtwellensignale eine Fehlersicherung zu schaffen, die vom Einsatz mehrerer unkorrelierter Übertragungskanäle nach dem Diversitätsprinzip ausgeht, aber zur weiteren Verbesserung der Bitfehlerrate keine extrem großen Interleaver-Speicher mit den damit verbundenen Schwierigkeiten der langen Verzögerung, dem hohen Speicherbedarf und der komplexen Implementierung benötigt. Es soll durch die Erfindung bei der optischen Freiraum-Übertragung digitaler Lichtwellensignale eine Fehlersicherung geschaffen werden, die vom Einsatz mehrerer unkorrelierter Übertragungskanäle nach dem Diversitätsprinzip ausgeht, aber zur weiteren Verbesserung der Bitfehlerrate keine extrem langen Verzögerungszeiten durch Interleaving oder Diversity-Verzögerung (Delay Diversity) in Kauf nehmen muss.

Gemäß der Erfindung, die sich auf ein Verfahren der eingangs genannten Art bezieht, wird diese Aufgabe in vorteilhafter und zweckmäßiger Weise dadurch gelöst, dass die sendeseitig erzeugten Codesequenzen durch Multiplexen auf die unabhängigen Kanäle parallel verteilt werden und dass im Empfänger mittels eines Demultiplexers die Parallelisierung der Signale auf den Kanälen rückgängig gemacht wird, mittels eines Entscheiders die Empfangsleistungspegel auf diskrete Werte, d.h. Bits, abgebildet werden und in einem Decoder die Bitfolgen decodiert werden.

Der wesentliche Vorteil der durch die Erfindung erreichten Fehlersicherung in Verbindung mit einem Diversitätsverfahren über mehrere weitgehend unkorrelierte und voneinander unabhängige Übertragungskanäle von der Sendeseite zum Empfänger liegt darin, dass keine extrem großen Interleaver-Zwischenspeicher mit den bekannten Problemen der langen Verzögerung, dem hohen Speicherbedarf und der komplexen Realisierung benutzt zu werden brauchen und trotzdem der verwendete Fehlersicherungscode voll in seiner Fehlerkorrekturkapazität ausgenutzt werden kann. Würden die Codesequenzen nur über einen einzigen Kanal übertragen werden, so müssten Interleaver eingesetzt werden, welche die Fehlersequenzen spreizen.

Das beim Verfahren nach der Erfindung verwendete optische Diversitätsprinzip hat die Voraussetzung zu erfüllen, dass die Daten verschiedener Sendequellen auf Grund ihrer Wellenlänge und/oder Polarisationen am Empfänger getrennt voneinander detektiert werden können.

Bei der optischen Freiraumübertragung digitaler Lichtwellensignale wird durch das Verfahren nach der Erfindung eine Fehlersicherung geschaffen, die den Einsatz mehrerer unkorrelierter Übertragungskanäle nach dem Diversitätsprinzip ausnützt, jedoch darüber hinaus zur weiteren Verbesserung der Bitfehlerrate keine extrem langen Verzögerungszeiten durch Interleaving oder Diversitätsverzögerung (Delay Diversity) in Kauf nimmt. Es handelt sich um kein reines Diversitätsverfahren. Vielmehr findet hier eine vorteilhafte Kombination von Diversitätsverfahren, parallelisierter Datenübertragung und Codierung statt.

Nach der Erfindung werden die sendeseitig erzeugten Codesequenzen durch Multiplexen parallelisiert und über mindestens zwei Kanäle durch optische Verfahren übertragen. Hierbei wird auf jedem Kanal eine andere Information übertragen. Beim Verfahren nach der Erfindung wird nicht von einem Totalausfall der einzelnen Kanäle ausgegangen, sondern lediglich von weitgehend unkorrelierten Kanälen. Die Diversität der einzelnen Kanäle wird durch ein ausgewähltes bekanntes Diversitätsverfahren, insbesondere Wellenlängendiversität, Polarisationsdiversität und Ortsdiversität, erreicht und diese wird kombiniert mit der Übertragung parallelisierter Codewörter.

Der durch das verschiedene Verhalten zweier oder mehr Signale mit unterschiedlichen Polarisationen bzw. Wellenlängen entstehende Effekt wird zweifach ausgenutzt. Es werden zum einen weitgehend unkorrelierte Übertragungskanäle erhalten, da sich verschiedene Polarisationen bzw. Wellenlängen verschieden durch die Atmosphäre ausbreiten. Zum anderen können die Signale getrennt detektiert werden. Weiterhin wird die Kanalcodierung des elektrisch vorliegenden Quellensignals angewandt, um entstehende Übertragungsfehler in den einzelnen Kanälen bzw. im gesamten parallelisierten Übertragungssystem erkennen bzw. korrigieren zu können. Hierzu wird beim Verfahren nach der Erfindung nicht das Datensignal der einzelnen Kanäle codiert übertragen, sondern das auf die Kanäle durch das Multiplexen aufgeteilte codierte Quellensignal. Empfängerseitig können zur optimalen Decodierung verschiedene an sich bekannte Verfahren angewandt werden, wie z.B. Verfahren zum Demultiplexen und Decodieren von Faltungs-, Turbo- oder Blockcodes mit oder ohne Soft-Decision.

In einer Variante der Erfindung ist es möglich, die Signalverarbeitung des Multiplexers mit entsprechenden technischen Verfahren rein optisch durchzuführen. Die elektro-optische Wandlung wird dann vor dem Multiplexen vorgenommen. Dies erspart die aufwendige und kostspielige Mehrfachherstellung elektro-optischer bzw. auf der Empfängerseite optoelektrischer Wandler-Hardware.

Außerdem kann beim Verfahren nach der Erfindung durch Soft-Decision entschieden werden, welche der Kanäle für eine weitere Verarbeitung der Datensignale sinnvoll herangezogen werden können. Soft-Decision ist zwar prinzipiell auch bei Verwendung nur eines einzigen Übertragungskanals in Kombination mit Interleaving möglich, würde jedoch zu einem um die Soft-Information erhöhten Bedarf an Speicherkapazität für den Interleaver führen. Hierdurch würden die ohnehin schon sehr speicherintensiven Interleaver nochmals vergrößert.

Unter dem Begriff "Multiplexer" bzw. "Multiplexen" wird in dieser Patentanmeldung verstanden, dass ein serieller Datenstrom in Datenpakete bzw. Sequenzen segmentiert wird und diese sich untereinander unterscheidenden Datenpakete bzw. Sequenzen nach einem festgelegten Verfahren auf alle parallelen Kanäle aufgeteilt werden. Das Aufteilungsverfahren, also die Multiplexregel, wird derart gewählt, dass es später beim Demultiplexen und eventuell beim Decodieren des codierten Datenstromes auf der Empfangsseite zu einem maximalen Codierungsgewinn kommt.

Der Multiplexer kann sowohl eine rein optische als auch eine rein elektrisch arbeitende Systemkomponente sein.

Der Demultiplexer auf der Empfangsseite ist die inverse Komponente zum sendeseitigen Multiplexer. Diese Systemkomponente macht die auf der Sendeseite durchgeführte, intelligente Parallelisierung des Multiplexers rückgängig.

Beim optischen Freiraum Übertragungsverfahren nach der Erfindung wird also von statistisch unabhängigen Diversitätskanälen einer optischen Übertragungsstrecke profitiert, indem der Codegewinn von auf die unabhängigen Kanäle gemultiplexten Codesequenzen von Fehlersicherungscodes mit Hard-Decision-oder Soft-Decision-Decodierung ausgenutzt wird.

Vorteilhafte und zweckmäßige Weiterbildungen und Ausgestaltungen des Verfahrens nach der Erfindung sind in den Unteransprüchen angegeben, die unmittelbar oder mittelbar auf den Patentanspruch rückbezogen sind.

Das Verfahren nach der Erfindung wird nachfolgend im einzelnen anhand einer Zeichnung erläutert. Es zeigen:
- Fig.1: die bereits vorher erläuterte Speichermatrix-Implementierung eines Block-Interleavers,
- Fig.2: als Ausführungsbeispiel das Prinzipblockschaltbild einer erfindungsgemäß ausgebildeten Kombination von Wellenlängendiversität mit Multiplex und Fehlersicherungscodierung, und
- Fig.3: eine schematische Darstellung der Funktionalität eines Multiplexers.

Dem durch die Erfindung erreichten Fehlersicherungssystem wird zu Grunde gelegt, dass n (n ≥ 2) möglichst unkorrelierte Übertragungskanäle vom Sender zum Empfänger vorhanden sind. Dies kann durch drei verschiedene Diversity-Übertragungsprinzipien erreicht werden.

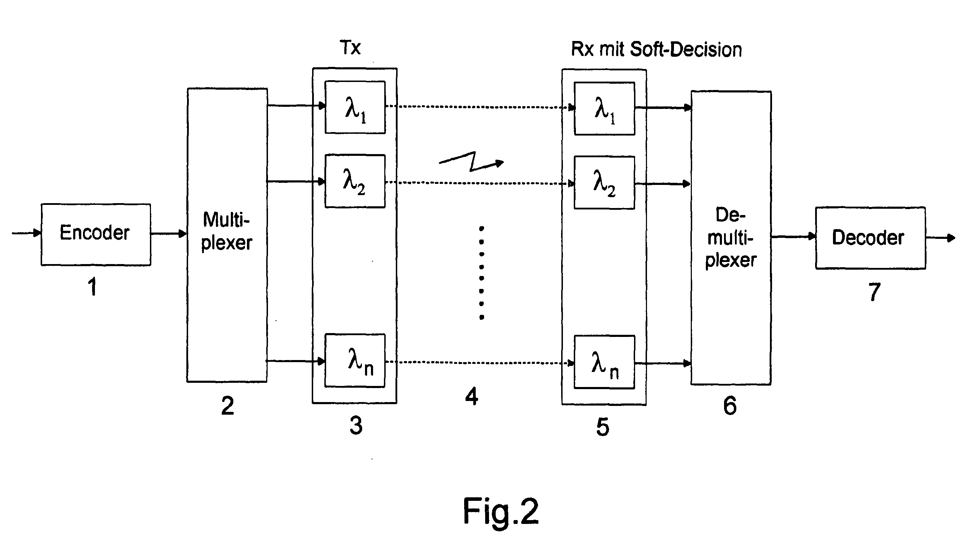

Es kann Wellenlängendiversität verwendet werden, wobei die zu übertragende Nachricht auf n Kanäle aufgeteilt wird. Für jeden der n Kanäle wird zur Übertragung eine andere Wellenlänge λ₁,...,λₙ im optischen Bereich durch Intensitätsmodulation moduliert. Durch getrennte Detektion der Wellenlängen werden n unabhängige Übertragungskanäle erhalten. Dieses Diversitätsprinzip wird in dem in Fig.2 dargestellten Ausführungsbeispiel des Verfahrens nach der Erfindung eingesetzt.

Eine zweite Möglichkeit zum Erzeugen unkorrelierter Kanäle besteht darin, das bereits erläuterte Senderdiversitätsprinzip derart zu modifizieren, dass für die n verwendeten Sender jeweils eine andere Wellenlänge im optischen Bereich verwendet wird. Hiermit wird erreicht, dass die durch verschiedene Volumina propagierten Felder durch chromatische Aufspaltung im Empfänger getrennt voneinander detektiert werden können. Auch auf diese Weise werden wie bei der vorstehend erläuterten reinen Wellenlängendiversität n weitgehend unkorrelierte Kanäle erzielt, die ein voneinander unabhängiges Fehlerverhalten zeigen.

Wird als dritte Diversitätsvariante das Senderdiversitätsprinzip derart verwendet, dass die Polarisation des optischen Signals jedes Senders verschieden ist, so wird wie bei dem vorher erläuterten modifizierten Senderdiversitätsprinzip ebenfalls die Möglichkeit erreicht, die durch verschiedene turbulente Volumina propagierten Felder getrennt voneinander zu detektieren, indem im Empfänger Polarisationsstrahlteiler eingesetzt werden.

Durch die vorstehend beschriebenen drei Diversity-Übertragungsprinzipien werden n weitgehend unkorrelierte Übertragungskanäle erzeugt. Jeder Kanal für sich zeigt das typische Verhalten eines optischen Fading-Kanals mit in Relation zur Bitlänge sehr langen mittleren Fade-Dauern. Da die Kanäle jedoch weitgehend unkorreliert sind, ist die Wahrscheinlichkeit groß, dass, während sich ein Kanal in einem schlechten Übertragungszustand (Fade-Zustand) befindet, sich die anderen Kanäle normal verhalten oder sich sogar im sogenannten Surge-Zustand befinden.

Dieser Effekt kann für das neue Fehlersicherungskonzept gemäß der Erfindung ausgenutzt werden, indem, wie in Fig.2 im Blockschaltbild gezeigt und verdeutlicht ist, die von einem Encoder 1 erzeugten Sequenzen der Länge m durch Multiplexen mittels eines Multiplexers 2 vorteilhaft, d.h. im Sinne der Codierung, auf die n Kanäle im Sender 3 entsprechend den n zur Verfügung stehenden Wellenlängen λ₁ bis λₙ verteilt werden. Hierbei muss die Länge der Sequenzen m nicht zwingend der Anzahl n der Kanäle entsprechen, die vom Sender 3 über eine optische Freiraum-Übertragungsstrecke 4 zu einem Empfänger 5 verlaufen. Im Empfänger 5 wird mittels eines Demultiplexers 6 die Parallelisierung der Datensignale rückgängig gemacht und mittels eines Entscheiders werden die Empfangsleistungspegel auf diskrete Werte, d.h. Bits, abgebildet. Hierbei kann zwar grundsätzlich Hard-Decision verwendet werden, jedoch kann durch Soft-Decision zusätzlich eine aktuelle Kanalzustandsinformation gewonnen werden. In einem Decoder 7 können nun die gewichteten Bitfolgen decodiert werden.

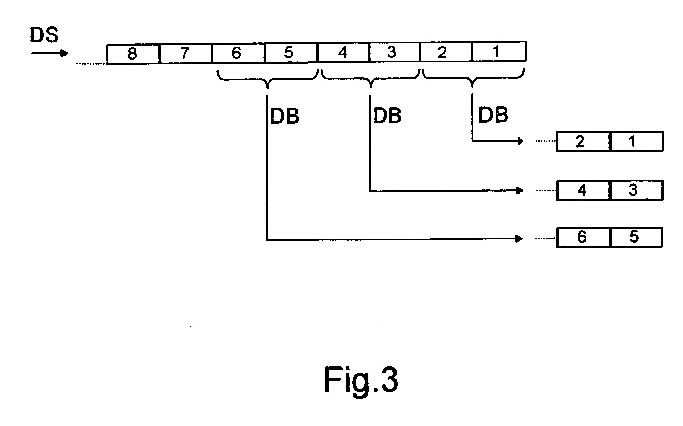

Fig.3 zeigt schematisch ein einfaches Beispiel für die Funktionalität eines Multiplexers, so wie er beispielsweise in Fig.2 unter dem Bezugszeichen 2 dargestellt ist. Es wird in Fig.3 beispielhaft folgende Multiplexregel angewandt: Je zwei Bits des codierten seriellen Datenstromes DS sind zu Datenblöcken DB (1,2; 3,4; 5,6; etc.), d.h. Sequenzen, zusammenzufassen. Die verschiedenen Datenblöcke (Sequenzen) DB sind dann parallel über die verschiedenen Diversitykanäle der optischen Freiraum-Übertragungsstrecke zu übertragen. Der Multiplexer 2 segmentiert also den seriellen Datenstrom DS in Datenblöcke DB (Sequenzen). Diese sich unterscheidenden Datenblöcke DB teilt er dann nach einem festgelegten Verfahren auf alle parallelen Diversitykanäle auf. Das Aufteilungsverfahren, also die Multiplexregel, wird in zweckmäßiger Weise derart gewählt, dass es später beim Demultiplexen und eventuell Decodieren des codierten Datenstromes DS zu einem maximalen Codierungsgewinn kommt.

Bei der erfindungsgemäßen Kombination von Wellenlängendiversität oder einer anderen der erwähnten Diversitäten mit Multiplex und Fehlersicherungscodierung ergeben sich vorteilhafte Anwendungsmöglichkeiten, die nachfolgend erläutert werden.

Es lassen sich insbesondere Kanalzustandsinformationen ausnutzen. Die gleichen Informationen werden über mehrere optische Diversitätskanäle redundant übertragen. Im Decoder des Empfängers werden dann die mit Kanalzustandsinformationen gewichteten Datensignale verglichen, und es wird das Bit desjenigen Kanals weiterverwendet, der momentan das beste Signal/Rausch-Leistungsverhältnis aufweist. Dieses Verfahren entspricht einer Maximum-Likelihood-Entscheidung. Wird die Information über mindestens drei Kanäle übertragen, so ist die Möglichkeit zweckmäßig, eine Mehrheitsentscheidung über die Richtigkeit der Bits durchzuführen.

Des weiteren können in vorteilhafter Weise Blockcodes angewendet werden. Die durch verschiedene Wellenlängen erzeugten, weitgehend unkorrelierten Kanäle können ausgenutzt werden, indem Sequenzen der Länge n eines Blockcodes parallel und zeitlich gleich über die n Kanäle übertragen werden. In diesem Fall entspricht der Multiplexer einem einfachen Seriell-Parallel-Wandler. Ein Blockcode der Länge n, der t Fehler korrigieren kann, ist in der Lage, die Fehler von t Kanälen auszugleichen und somit eine fehlerfreie Übertragung der Information zu erreichen. Es können sich also gleichzeitig t Kanäle in einem Fade-Zustand befinden. Da die Empfangsleistung dieser durch einen Fade gestörten Kanäle gering ist, ist die Zuverlässigkeit dieser Kanäle gering und die Fehlerwahrscheinlichkeit hoch. Eine Kenntnis dahingehend, welche der n Kanäle sich im Fade-Zustand befinden, ist für die Codierung nicht zwingend erforderlich. Kurze Blockcodes bieten zusätzlich die vorteilhafte Möglichkeit, dass sie Soft-Decision verarbeiten können.

Beim Verfahren nach der Erfindung lassen sich in vorteilhafter Weise auch Faltungscodes mit Soft-Decision-Decodierung anwenden. Der Datenstrom eines systematischen Faltungscodes oder Turbo-Codes wird so aufgeteilt, dass Informations- und Redundanzbits über verschiedene Kanäle übertragen werden. Auf der Empfängerseite erfolgt eine Soft-Decision-Decodierung. Dieses Verfahren hat den Vorteil, dass bei der Decodierung von Faltungscodes durch Verwendung des Viterbi-Algorithmus Soft-Decision ohne wesentlichen Mehraufwand implementiert werden kann. Kanalzustandsinformationen bieten darüber hinaus die Möglichkeit, bestimmte Bits aus schlechten Kanälen auszublenden und nicht an den Decoder weiterzugeben. Dieses Ausblenden von Bits entspricht in etwa dem Prinzip der auch als Lochung bezeichneten Punktierung von Faltungscodes zur Ratenanpassung. Der decodierende Viterbi-Algorithmus kann das Verfahren der Punktierung ohne großen Mehraufwand und vor allem auch ohne großen Verlust an Leistungsfähigkeit ausführen.

### Bezugszeichenliste

- 1: Encoder
- 2: Multiplexer
- 3: Sender
- 4: Optische Freiraum-Übertragungsstrecke
- 5: Empfänger
- 6: Demultiplexer
- 7: Decoder
- DB: Datenblöcke (Sequenzen)
- DS: Codierter serieller Datenstrom

## Patentansprüche

1. Verfahren zur optischen Übertragung von auf Lichtwellen in Form einer Intensitätsmodulation aufmodulierten, digitalen Signalen über eine optische Freistrahl-Übertragungsstrecke (4) zwischen einer Sendeseite (3) und einem Empfänger (5), wobei zum einen mehrere statistisch weitgehend unabhängige und unkorrelierte Kanäle mittels Anwendung eines optischen Diversitätsprinzips erzeugt werden und zum anderen sendeseitig mittels eines Fehlersicherungscodes eine aus Sequenzen bestehende Kanalcodierung vorgenommen wird, die durch Hinzufügen von Redundanz eine im Empfänger durchzuführende Korrektur von Übertragungsfehlern ermöglicht, die durch Schwund, d.h. durch Einbruch der Signal-Empfangsleistung gegenüber der mittleren Signal-Empfangsleistung, entstanden sind, **dadurch gekennzeichnet, dass** die sendeseitig erzeugten seriellen Codesequenzen durch Multiplexen in Form einer Seriell-Parallel-Wandlung auf die unabhängigen Kanäle parallel verteilt werden und dass im Empfänger (5) mittels eines Demultiplexers (6) die Parallelisierung der Signale auf den Kanälen rückgängig gemacht wird, mittels eines Entscheiders die Empfangsleistungspegel auf diskrete Werte, d.h. Bits, abgebildet werden und in einem Decoder (7) die Bitfolgen decodiert werden.

2. Verfahren nach Anspruch 1, **dadurch gekennzeichnet, dass** von der Sendeseite (3) ausgehende gleiche Signale über mehrere unabhängige Kanäle getrennt übertragen werden und empfangsseitig im Decoder (7) die mit Kanalzustandsinformationen gewichteten Signale aus den verschiedenen Kanälen verglichen werden und dass zur weiteren Verarbeitung der Signale jeweils das Bit desjenigen Kanals verwendet wird, der momentan das beste Signal/Rausch-Leistungsverhältnis aufweist.

3. Verfahren nach Anspruch 2, **dadurch gekennzeichnet, dass** bei Übertragung der gleichen Signale über mindestens drei Kanäle eine Mehrheitsentscheidung über die Richtigkeit der Bits vorgenommen wird.

4. Verfahren nach Anspruch 1, **dadurch gekennzeichnet, dass** die Entscheidungsfindung im empfangsseitigen Entscheider durch sogenannte Hard-Decision erfolgt.

5. Verfahren nach Anspruch 1, **dadurch gekennzeichnet, dass** die Entscheidungsfindung im empfangsseitigen Entscheider durch sogenannte Soft-Decision erfolgt, durch die eine aktuelle Kanalzustandsinformation zur Wichtung der Bitfolgen der einzelnen Kanäle gewonnen wird, so dass dann im Decoder (7) die gewichteten Bitfolgen decodiert werden.

6. Verfahren nach einem der vorhergehenden Ansprüche, **dadurch gekennzeichnet, dass** Codewort-Sequenzen gleicher Länge eines Blockcodes parallel und zeitlich gleich über die unabhängigen Kanäle übertragen werden.

7. Verfahren nach einem der Ansprüche 1 bis 5, **dadurch gekennzeichnet, dass** Prüfbitfolgen und Informationsbitfolgen eines systematischen Faltungscodes oder Turbocodes aufgeteilt und über verschiedene voneinander unabhängige Kanäle übertragen werden.

8. Verfahren nach Anspruch 7, **dadurch gekennzeichnet, dass** auf der Empfängerseite eine Soft-Decision-Decodierung vorgenommen wird.

9. Verfahren nach Anspruch 8, **gekennzeichnet durch** die Verwendung des Viterbi-Algorithmus bei der Decodierung von Faltungscodes.

10. Verfahren nach einem der Anspruch 7 bis 9, **dadurch gekennzeichnet, dass** empfängerseitig auf Grund von Kanalzustandsinformationen bestimmte Bits aus Kanälen mit schlechten Übertragungsbedingungen ausgeblendet werden und nicht an den Decoder (7) weitergegeben werden, wobei das Ausblenden im wesentlichen dem Prinzip der auch als Lochung bezeichneten Punktierung von Faltungscodes zur Ratenanpassung entspricht.

11. Verfahren nach Anspruch 1, **dadurch gekennzeichnet, dass** das angewandte optische Diversitätsprinzip zur Erzeugung mehrerer statistisch weitgehend unabhängiger und unkorrelierter Kanäle darin besteht, dass für die verschiedenen Kanäle entsprechend dem Wellenlängendiversitätsprinzip unterschiedliche Wellenlängen der Lichtwellen vorgesehen werden, die dann im Empfänger (5) getrennt detektiert werden.

12. Verfahren nach Anspruch 1, **dadurch gekennzeichnet, dass** das angewandte optische Diversitätsprinzip zur Erzeugung mehrerer statistisch weitgehend unabhängiger und unkorrelierter Kanäle darin besteht, dass für die verschiedenen Kanäle entsprechend einem modifizierten Senderdiversitätsprinzip auf der Sendeseite getrennte ausstrahlende Sender betrieben werden, von denen jeder mit einer anderen Wellenlänge der Lichtwellen sendet, die dann im Empfänger (5) getrennt detektiert werden.

13. Verfahren nach Anspruch 1, **dadurch gekennzeichnet, dass** das angewandte optische Diversitätsprinzip zur Erzeugung mehrerer statistisch weitgehend unabhängiger und unkorrelierter Kanäle darin besteht, dass für die verschiedenen Kanäle entsprechend einem modifizierten Senderdiversitätsprinzip auf der Sendeseite getrennte ausstrahlende Sender betrieben werden, von denen jeder mit einer anderen Polarisation der Lichtwellen sendet, die dann im Empfänger (5) getrennt detektiert werden.

## Claims

1. A method for optical transmission of digital signals modulated on light waves by means of an intensity modulation, via an optical free-beam transmission path (4) between a transmission side (3) and a receiver (5), wherein on the one hand a plurality of channels, which are statistically independent to a large extent and uncorrelated, are produced using an optical diversity principle, and on the other hand on the trans-mission side a channel encoding composed of sequences is carried out by means of an error protection code, said channel coding allowing transmission errors to be corrected in the receiver by adding a redundancy, which transmission errors are due to fading, i.e. drop of the signal reception power as compared to the mean signal reception power, **characterized in that** the serial code sequences produced on the transmission side are distributed, by multiplexing in the form of a serial-parallel conversion, in parallel to the independent channels, and in the receiver (5) the parallelization of the signals on the channels is cancelled by means of a de-multiplexer (6), the reception power levels are mapped to discrete values, i.e. bits, by means of a decision unit, and the bit sequences are decoded in a decoder (7).

2. The method according to claim 1, **characterized in that** identical signals coming from the transmission side (3) are separately transmitted via a plurality of independent channels, and on the receiver side the signals weighted with channel state information from the various channels are compared in the decoder (7), and that for further processing of the signals the respective bit of that channel is used which presently comprises the best signal-to-noise power ratio.

3. The method according to claim 2, **characterized in that** during transmission of the identical signals via at least three channels a majority decision with regard to the correctness of the bits is made.

4. The method according to claim 1, **characterized in that** the decision-making in the receiver-side decision unit is performed by a so-called hard decision.

5. The method according to claim 1, **characterized in that** the decision-making in the receiver-side decision unit is performed by a so-called soft decision by means of which a current channel information for weighting the bit sequences of the individual channels is obtained such that the weighted bit sequences are then decoded in the decoder (7).

6. The method according to any one of the preceding claims, **characterized in that** codeword sequences of identical lengths of a block code are transmitted in parallel and simultaneously via the independent channels.

7. The method according to any one of claims 1 to 5, **characterized in that** check bit sequences and information bit sequences of a systematic con-volution code or turbo code are subdivided and transmitted via different independent channels.

8. The method according to claim 7, **characterized in that** on the receiver side a soft decision decoding is carried out.

9. The method according to claim 8, **characterized by** use of the Viterbi algorithm for decoding convolution codes.

10. The method according to any one of claims 7 to 9, **characterized in that** on the receiver side, on the basis of channel state information, certain bits are removed from channels displaying poor transmission conditions and are not forwarded to the decoder (7), wherein the removal essentially corresponds to the principle of perforation, also referred to as punching, of convolution codes for rate adaptation purposes.

11. The method according to claim 1, **characterized in that** the applied optical diversity principle for generating a plurality of channels, which are statistically independent to a large extent and uncorrelated, comprises providing of different wavelengths of the light waves for the different channels according to the wavelength diversity principle, said wave-lengths being then separately detected in the receiver (5).

12. The method according to claim 1, **characterized in that** the applied optical diversity principle for generating a plurality of channels, which are statistically independent to a large extent and uncorrelated, comprises operation of separate emitting transmitters on the transmission side for the different channels according to a modified transmitter diversity principle, with each transmitter transmitting at a different wavelength of the light waves, said wavelengths being then separately detected in the receiver (5).

13. The method according to claim 1, **characterized in that** the applied optical diversity principle for generating a plurality of channels, which are statistically independent to a large extent and uncorrelated, comprises operation of separate emitting transmitters on the transmission side for the different channels according to a modified transmitter diversity principle, with each transmitter transmitting at a different polarization of the light waves, said polarizations being separately detected in the receiver (5).

## Revendications

1. Procédé de transmission optique de signaux numériques, modulés sur des ondes lumineuses, sous la forme d'une modulation d'intensité, via un trajet de transmission de rayon libre optique (4), entre un côté émetteur (3) et un récepteur (5), plusieurs canaux statistiquement quasi-indépendants et non corrélés étant d'une part générés au moyen de l'application du principe de diversité optique et d'autre part, du côté émetteur, un codage des canaux par séquences étant réalisé au moyen d'un code de protection contre les erreurs, qui en ajoutant une redondance, autorise la correction d'erreurs de transmission à effectuer dans le récepteur, lesquelles sont survenues par évanouissement, c'est-à-dire par atténuation de la puissance de réception du signal par rapport à la puissance de réception moyenne du signal, **caractérisé en ce que** les séquences de codes série, générées côté émission sont réparties en parallèle sur les canaux indépendants par multiplexage, sous la forme d'une conversion série-parallèle et que dans le récepteur (5), la parallélisation des signaux sur les canaux est annulée à l'aide d'un démultiplexeur (6), les niveaux de puissance de réception étant reproduits sur des valeurs discrètes, c'est-à-dire des bits au moyen d'un circuit de décision et les séquences de bits sont décodées dans un décodeur (7).

2. Procédé selon la revendication 1, **caractérisé en ce que** les signaux identiques en sortie côté émetteur (3) sont transmis séparément sur plusieurs canaux indépendants et que côté récepteur, les signaux pondérés avec des informations d'état des canaux provenant des différents canaux sont comparés dans le décodeur (7) et que pour poursuivre le traitement des signaux, on utilise toujours le bit du canal qui présente le meilleur rapport de performance signal/bruit à cet instant.

3. Procédé selon la revendication 2, **caractérisé en ce que** lors de la transmission de signaux identiques sur au moins trois canaux, une décision majoritaire sur l'exactitude des bits est prise.

4. Procédé selon la revendication 1, **caractérisé en ce que** la prise de décision dans le circuit de décision côté réception s'effectue, par une décision dite dure.

5. Procédé selon la revendication 1, **caractérisé en ce que** la prise de décision dans le circuit de décision côté réception s'effectue, par une décision dite molle, par laquelle on acquiert une information d'état actualisée des canaux pour la pondération des séquences de bits des différents canaux, de sorte que les séquences de bits pondérées sont ensuite décodées dans le décodeur (7).

6. Procédé selon l'une quelconque des revendications précédentes, **caractérisé en ce que** les séquences de mots-code de même longueur d'un code bloc sont transmises en parallèle et simultanément, sur des canaux indépendants.

7. Procédé selon l'une quelconque des revendications 1 à 5, **caractérisé en ce que** les séquences de bits de contrôle et les séquences de bits d'information d'un turbocode ou d'un code convolutionnel systématique sont réparties et transmises sur différents canaux indépendants entre eux.

8. Procédé selon la revendication 7, **caractérisé en ce que** côté réception est effectué un décodage à décision molle.

9. Procédé selon la revendication 8, **caractérisé par** l'utilisation de l'algorithme de Viterbi pour le décodage de codes convolutionnels.

10. Procédé selon l'une quelconque des revendications 7 à 9, **caractérisé en ce que** côté réception, les bits déterminés comme provenant de canaux avec de mauvaises conditions de transmission sur la base d'informations d'états des canaux sont masqués et ne sont pas transmis au décodeur (7), le masquage correspondant à peu près au principe du poinçonnage des codes convolutionnels, également appelé perforation, destiné à l'ajustement des rendements.

11. Procédé selon la revendication 1, **caractérisé en ce que** le principe de diversité optique utilisé pour la génération de plusieurs canaux statistiquement quasi-indépendants et non corrélés consiste à prévoir pour les différents canaux, conformément au principe de diversité des longueurs d'ondes, différentes longueurs d'ondes pour les ondes lumineuses qui sont ensuite détectées séparément dans le récepteur (5).

12. Procédé selon la revendication 1, **caractérisé en ce que** le principe de diversité optique utilisé pour la génération de plusieurs canaux statistiquement quasi-indépendants et non corrélés consiste à exploiter pour les différents canaux, selon un principe de diversité d'émission modifié, des émetteurs émettant séparément côté émission, parmi lesquels chacun émet avec une longueur d'onde différente pour les ondes lumineuses qui est ensuite détectée séparément dans le récepteur (5).

13. Procédé selon la revendication 1, **caractérisé en ce que** le principe de diversité optique utilisé pour la génération de plusieurs canaux statistiquement quasi-indépendants et non corrélés consiste à exploiter pour les différents canaux, selon un principe de diversité d'émission modifié, des émetteurs émettant séparément côté émission, parmi lesquels chacun émet avec une polarisation différente des ondes lumineuses qui est ensuite détectée séparément dans le récepteur (5).
